# EUROPÄISCHE PATENTSCHRIFT

(11) **EP 1 595 454 B1**
(45) Veröffentlichungstag und Bekanntmachung des Hinweises auf die Patenterteilung: **02.05.2007**
(21) Anmeldenummer: 04011181.7
(22) Anmeldetag: 11.05.2004
(51) Int. Cl.: A22C 7/00, A23P 1/08

(54) **Vorrichtung und Verfahren zum Rollen von flächigen Lebensmittelprodukten**
Device and method for rolling flat food products
Dispositif et procédé pour enrouler des produits alimentaires plats

(43) Veröffentlichungstag der Anmeldung: 16.11.2005
(73) Patentinhaber: René Senn AG, 5426 Lengnau (CH)
(72) Erfinder: Senn, René, 5426 Lengnau (CH)
(74) Vertreter: Manitz, Finsterwald & Partner GbR

(56) Entgegenhaltungen:
- EP-A- 0 360 498
- EP-A- 0 454 202
- EP-A- 1 256 279
- WO-A-01/41574
- DE-A- 4 402 346

## Beschreibung

Die Erfindung betrifft eine Vorrichtung sowie ein Verfahren zum Aufrollen von flächigen Lebensmittelprodukten, insbesondere Schinken-, Speck-, Wurst- oder Käsescheiben.

Oftmals werden insbesondere Schinken- oder Aufschnittscheiben in aufgerollter Form verpackt und in den Handel gebracht. Das Darbieten der Scheiben in nebeneinanderliegenden Röllchen hat unter Anderem den Vorteil, dass die Entnahme einer einzelnen Scheibe für den Verbraucher einfacher ist, da die Scheiben weniger leicht zusammenkleben, als wenn sie plan übereinander liegen oder schindelartig gestapelt sind. Zudem entsteht durch das größere Volumen der Röllchen im Vergleich zu gestapelten Scheiben der Eindruck, es befinde sich mehr Ware in der Verpackung. Bisher werden die Scheiben allerdings ausschließlich von Hand aufgerollt, was zeitaufwendig und kostenintensiv ist.

Des Weiteren finden sich im Lebensmittelhandel Produkte, bei denen ein zumeist längliches Lebensmittel in eine Scheibe eines anderen Lebensmittelproduktes eingewickelt ist. So erfreuen sich beispielsweise in eine Speckscheibe eingewickelte Grillwürstchen großer Beliebtheit. Diese Grillwürstchen können mitsamt der um sie herumgewickelten Speckscheibe sofort gegrillt werden und werden in hoher Stückzahl verkauft. Bisher werden die Würstchen jeweils von Hand in eine Speckscheibe eingerollt. Dieses Verfahren ist allerdings aufgrund der hohen Personalkosten für den Hersteller nicht befriedigend. Zudem ist es vergleichsweise schwierig, die nötigen hygienischen Bedingungen zu gewährleisten.

Aus EP 0 454 202 A1 ist eine Vorrichtung zum Aufrollen von flächigen Lebensmittelprodukten bekannt, bei der ein Transportband um Führungsrollen geführt wird, wobei auf diese Weise ein für den Aufrollprozess vorgesehener Raum umschlossen wird.

Die Dokumente EP0360498 A1, EP1 256 279 A und WO 01/41574 zeigen verschiedene Vorrichtungen zum Aufrollen von flächigen Lebensmittelprodukten, bei denen das aufzurollende Produkt von mehreren bewegbaren Transportwänden auf mehreren Seiten eingeschlossen wird.

Eine Vorrichtung mit den Merkmalen des Oberbegriffs des Anspruchs 1 und ein Verfahren mit den Merkmalen des Oberbegriffs des Anspruchs 17 sind in DE 44 02 346 A1 beschrieben.

Aufgabe der vorliegenden Erfindung ist es daher, eine Vorrichtung und ein Verfahren zur Verfügung zu stellen, welche ein Aufrollen von flächigen Lebensmittelprodukten mit einem möglichst geringen Zeit- und Kostenaufwand erlauben, wobei insbesondere auch ein Einrollen anderer Produkte in die flächigen Lebensmittelprodukte möglich sein soll.

Diese Aufgabe wird erfindungsgemäß durch die Merkmale der unabhängigen Ansprüche gelöst. Die erfindungsgemäße Vorrichtung zum Aufrollen von flächigen Lebensmittelprodukten weist einen Rollkäfig auf, der zumindest bereichsweise von wenigstens einer bewegbaren Transportwand begrenzt ist. Diesem Rollkäfig werden die aufzurollenden flächigen Lebensmittelprodukte, beispielsweise Schinken-, Speck-, Wurst- oder Käsescheiben, zugeführt.

Eine solche Vorrichtung ermöglicht erstmals eine automatisierte Produktion von aufgerollten flächigen Lebensmittelprodukten, in die eventuell ein weiteres Lebensmittelprodukt eingerollt sein kann. Dadurch können Personalkosten und Zeit gespart werden, so dass der gesamte Herstellungs- bzw. Verarbeitungsprozess kostengünstiger wird. Zudem ist es wesentlich einfacher, hygienische Bedingungen zu schaffen, da weniger Personen in den Herstellungs- bzw. Verarbeitungsprozess eingreifen.

Der Erfindung liegt die Idee zugrunde, eine Scheibe des gewünschten Lebensmittels einem von dem so genannten Rollkäfig begrenzten Raum zuzuführen, wo sie in Kontakt mit einer oder mehreren diesen Käfig begrenzenden Innenwänden gelangt. Diese Innenwand ist bewegbar und zwingt die Scheibe, ihre flächige Ausgangskonfiguration zu verlassen und eine Form anzunehmen, die durch den Rollkäfig vorgegeben ist. Durch eine geschickte Wahl der Form und Beschaffenheit des Rollkäfigs kann die Scheibe so geführt werden, dass sie durch die Einwirkung der bewegbaren Transportwände aufgerollt wird. Hierbei können sowohl die natürliche Haftung der Scheibe, insbesondere bei klebrigen, fettigen oder feuchten Lebensmitteln, als auch die Schwerkraft geschickt ausgenutzt werden.

So kann beispielsweise eine zunächst flach liegende Scheibe von der bewegbaren Transportwand transportiert werden und zunächst an ihrem vorderen Ende angehoben werden. Durch Haftung aufgrund einer klebrigen oder fettigen Oberfläche des Lebensmittelprodukts bleibt die Scheibe in Kontakt mit der Innenwand des Rollkäfigs, welche die Scheibe auf eine durch die Innenwand definierte Aufrollbahn zwingt. Die Scheibe muss nicht zwangsläufig während des gesamten Aufrollvorgangs, d.h. über einen Winkel von 360°, von dieser Bahn geführt werden, da unter Ausnutzung der Schwerkraft ein Aufrollen der Scheibe schon bei einem kleineren Winkel möglich sein kann.

Dem Rollkäfig kann eine Scheibe nach der anderen zugeführt werden, und die Scheiben können dann nacheinander in gleicher Weise aufgerollt werden. Im Gegensatz zu den bisherigen Verfahren, bei denen die Scheiben von Hand aufgerollt werden, kann man hierdurch automatisch annähernd identische oder zumindest ein gleichmäßiges Erscheinungsbild aufweisende Röllchen.

Der Rollkäfig ist von mehreren gleichsinnig bewegbaren Transportwänden zumindest bereichsweise begrenzt. Auf diese Weise wird eine aus mehreren Transportwänden zusammengesetzte, den Rollkäfig bildende bzw. begrenzende Aufrollbahn gebildet, auf der die aufzurollenden Scheiben geführt werden. So können zum Beispiel mehrere jeweils gerade Transportwände so aneinandergesetzt sein, dass jeweils zwei aufeinander folgende Transportwände einen Winkel von weniger als 180° einschließen. Jeweils beim Übergang von einer Transportwand zur anderen findet dadurch ein Richtungswechsel statt.

Der Rollkäfig kann auf diese Weise ohne in sich gekrümmte Transportwände realisiert werden, beispielsweise können als Transportwände übliche Förderbänder, Kettenförderer oder ähnliches verwendet werden.

Wenn mehrere Transportwände vorgesehen sind, so ist es besonders vorteilhaft, wenn eine erste Transportwand und eine letzte Transportwand einen Winkel von wenigstens 180° einschließen, wobei diese erste Transportwand und die letzte Transportwand einander gegenüberliegen und zumindest näherungsweise parallel zueinander verlaufen. Zur Verbindung der ersten und der letzten Transportwand kann mindestens eine weitere Transportwand zum Einsatz kommen, die beispielsweise näherungsweise senkrecht zu den beiden anderen Transportwänden verläuft.

Eine auf dieser Aufrollbahn transportierte Scheibe liegt zunächst flach auf der ersten Transportwand, wird dann, wenn sie mit ihrem vorderen Ende in Kontakt mit der zweiten Transportwand gelangt, an diesem Ende angehoben bzw. umgelenkt und nach einer entsprechend ablaufenden Überführung von der zweiten zur letzten Transportwand schließlich mit ihrem vorderen Ende voraus von der letzten Transportwand in eine ihrer ursprünglichen Bewegungsrichtung in etwa entgegengesetzte Richtung transportiert. Die Scheibe wird auf diese Weise gewissermaßen umgeklappt. Mit Hilfe eines erfindungsgemäßen Umlenker am Ende der letzten Transportwand wird die Scheibe mit ihrem vorderen Ende über die 180°-Wendung hinaus in Richtung auf die erste Transportwand umgelenkt und durch die zusätzliche Einwirkung der Schwerkraft bei geschickter Wahl der Winkel zwischen den einzelnen Transportwänden und der Geschwindigkeit der Transportwände schließlich aufgerollt.

Die entsprechende Wirkung wird zusätzlich verstärkt, wenn die letzte Transportwand mit der ersten Transportwand einen winkel von mehr als 180° einschließt.

Es hat sich als vorteilhaft erwiesen, die einzelnen Transportwände mit verschiedenen Geschwindigkeiten zu betreiben. So kann beispielsweise eine vertikale Transportwand eine höhere Geschwindigkeit besitzen als sich an diese anschließende horizontale Transportwände.

Nach einer bevorzugten Ausführungsform kann der Rollkäfig einen ständig offenen Zuführbereich für die aufzurollenden Produkte aufweisen. Es hat sich herausgestellt, dass ein einwandfreies Aufrollen auch bei nicht vollständig geschlossenem Rollkäfig problemlos möglich ist. Durch den ständig offenen Zuführbereich können die Scheiben dann nacheinander zum Aufrollen in den Rollkäfig befördert werden, ohne dass komplizierte Öffnungsmechanismen erforderlich wären.

Wie bereits oben erwähnt, kann die Transportwand als Förderband ausgebildet sein. Dies ist eine einfache und preisgünstige Lösung, da existierende Fördersysteme verwendet werden können.

Bei der Wahl des Materials für ein solches Förderband - und allgemein für die den Rollkäfig begrenzende Transportwand - wird ein Werkstoff bevorzugt, bei dem sich nach einer gewissen Anlaufphase von selbst durch den fortwährenden Kontakt mit den Lebensmittelprodukten optimale Transporteigenschaften einstellen. So kann beispielsweise eine sich ohnehin einstellende Verschmutzung insbesondere durch Fett als willkommene "Selbstkonditionierung" des Förderbandes genutzt werden, die gerade für das richtige Verhältnis aus Anhaftung einerseits und Ablösbarkeit andererseits sorgt.

Falls mehrere Transportwände vorgesehen sind, können diese beispielsweise als in Umlenkbereichen kämmende Mehrstrangförderer ausgebildet sein. Solche auch als Multistreifenförderer bezeichneten Mehrstrangförderer aus parallel verlaufenden, voneinander beabstandeten Förderstreifen erlauben ein Ineinandergreifen verschiedener Transportwände. So können beispielsweise ein erster Mehrstrangförderer und ein sich daran anschließender zweiter Mehrstrangförderer in einem Umlenkbereich kämmend unter einem grundsätzlich beliebigen Winkel zueinander angeordnet sein. Hierdurch wird ein unterbrechungsfreier Übergang von einem Förderer zum anderen erreicht, zudem kann die Winkelstellung der beiden Förderer zueinander problemlos verändert werden. Dies ist, wie weiter unten näher erläutert werden wird, besonders dann von Vorteil, wenn eine der Transportwände beweglich gelagert sein soll, um z.B. eine Öffnung zum Abtransport der aufgerollten Scheiben zu bilden.

Nach einer weiteren vorteilhaften Ausführungsform ist die Transportwand von einem Förderband gebildet, welches gleichzeitig für die Zufuhr der aufzurollenden Produkte zum Rollkäfig dient. Das die aufzurollenden Produkte anliefernde Förderband geht also direkt in den Rollkäfig über, d.h. das Lieferband wird gleichzeitig als Teil des Rollkäfigs genutzt.

Um den Aufrollvorgang zu erleichtern, ist an einem Endbereich des Rollkäfigs ein vorzugsweise in Richtung eines Zuführbereiches zeigender Umlenker, wie er vorstehend bereits kurz erwähnt wurde, für die flächigen Produkte vorgesehen .

Beispielsweise dann, wenn die Scheibe beim Durchlaufen des Rollkäfigs bereits um 180° umgelenkt worden ist, kann der Umlenker dem vorderen Ende der Scheibe abschließend die für ein Aufrollen erforderliche Bewegungsrichtung verleihen. Der Umlenker kann grundsätzlich beliebig und beispielsweise als einfache vorstehende Nase, als starrer oder biegsamer Metalldraht, als flexibler Schlauch oder als Fortsatz an einer Transportwand ausgebildet sein. Dadurch, dass der Umlenker in Richtung des Zuführbereiches zeigt, den die Scheibe durchläuft, bevor sie in den Rollkäfig gelangt, wird die Scheibe auf eine zumindest annähernd kreisförmige Bahn gezwungen, d.h. die für ein Aufrollen benötigten 360° werden vollendet; die Scheibe wird durch den Umlenker gewissermaßen auf sich selbst zurückgeführt, wie es für ein Aufrollen erforderlich ist.

Nach einer weiteren bevorzugten Ausführungsform weist der Rollkäfig eine verschließbare Austrittsöffnung für die aufgerollten Scheiben auf. Wenn durch eine Zuführöffnung kontinuierlich Scheiben in den Rollkäfig transportiert werden sollen, so ist es für einen möglichst effizienten und störungsfreien Verfahrensablauf wünschenswert, dass die fertig aufgerollten Scheiben den Rollkäfig auf einem anderen Weg wieder verlassen können. Hierzu ist die Austrittsöffnung vorgesehen, welche jeweils nach dem Aufrollen einer Scheibe für deren Abtransport geöffnet und dann wieder geschlossen werden kann.

Eine solche vorübergehende Austrittsöffnung kann zum Beispiel von einer beweglich gelagerten Transportwand gebildet sein. Hierdurch kann der Rollkäfig jeweils kurzzeitig z.B. aufgeklappt werden.

Das Wegbewegen einer Transportwand zur Bildung einer vorübergehenden Austrittsöffnung kann zum Beispiel auf besonders einfache Weise realisiert werden, wenn - wie oben bereits erwähnt - mehrere in den Umlenkbereichen kämmende Mehrstrangförderer verwendet werden. Ein solcher Mehrstrangförderer kann verschwenkbar und/oder verschiebbar gelagert sein und durch einfaches Verschwenken und/oder Verschieben so von den anderen Mehrstrangförderern wegbewegt werden, dass die gewünschte Austrittsöffnung entsteht.

Insbesondere dann, wenn eine verschließbare Austrittsöffnung vorgesehen ist, ist es besonders vorteilhaft, wenn eine Transportwand von einem gleichzeitig für die Zufuhr und den Abtransport der Produkte dienenden Förderband gebildet ist. Die aufzurollenden Produkte können folglich auf dem kombinierten An- und Abtransportband verbleiben und werden lediglich beim Passieren des Rollkäfigs unter Mithilfe der anderen Transportwand oder -wände der Aufrollbehandlung unterzogen. Während des An- und Abtransports können Transportwände, die nicht am An- und Abtransport beteiligt sind, angehalten oder sogar wegbewegt werden, so dass insbesondere der Abtransport nicht von anderen Transportwänden behindert wird. Im Anschluss an den Aufrollvorgang können die Produkte dann direkt beispielsweise einer Verpackungsanlage zugeführt werden.

Eine besondere Ausführungsform der Erfindung sieht vor, dass die Vorrichtung gleichzeitig zum Einrollen von Lebensmittelprodukten in die flächigen Lebensmittelprodukte in der Lage ist. So können beispielsweise, wie eingangs bereits erwähnt, Grillwürstchen in Speckscheiben eingerollt werden.

Hierfür kann eine Vorrichtung zur Beschickung des Rollkäfigs mit vorzugsweise länglichen Lebensmittelprodukten, beispielsweise den erwähnten Grillwürstchen, welche in die Scheiben eingerollt werden sollen, vorgesehen sein. Bei der Beschickungsvorrichtung kann es sich beispielsweise um ein Förderband, aber auch um eine Rutschbahn, einen Zufuhrtrichter oder Ähnliches handeln. Eine solche Beschickungsvorrichtung versorgt die Einrollvorrichtung kontinuierlich mit den einzurollenden Produkten, so dass kein Einlegen von Hand nötig ist.

Nach einer bevorzugten Ausführungsform ist die Beschickungsvorrichtung so angeordnet, dass die einzurollenden Produkte bezüglich einer Aufrollachse der Scheiben mit einer radialen und/oder tangentialen Richtungskomponente zuführbar sind. Die einzurollenden Würstchen werden hierbei also nicht axial von der Seite her in den Rollkäfig eingeführt, sondern können beispielsweise jeweils auf ein ebenfalls für die Zufuhr der Scheiben dienendes Förderband rutschen, gleiten oder fallen gelassen werden. Die Würstchen werden dann über dieses Förderband auf dem gleichen Wege wie die Scheiben in den Rollkäfig befördert.

Die Beschickung mit den einzurollenden Produkten kann so getaktet sein, dass in regelmäßigen Zeitabständen ein Würstchen zugeführt wird. Insbesondere ist die Taktfrequenz dabei mit der Zufuhrrate der Scheiben derart synchronisiert, dass jeweils abwechselnd eine Scheibe und ein Würstchen zu aufeinander abgestimmten Zeitpunkten in den Rollkäfig transportiert werden. Als günstig hat es sich erwiesen, zunächst ein Würstchen in den Rollkäfig zu transportieren, wo es dann in Rotation versetzt wird. Sobald das Würstchen eine gewünschte Einrollgeschwindigkeit erreicht hat, wird die um das Würstchen herum zu rollende Speckscheibe in der oben beschriebenen Weise dem Rollkäfig zugeführt. Beim Aufrollen der Scheibe rollt sich diese dann um das rotierende Würstchen, so dass dieses vollständig eingerollt wird. Das eingerollte Würstchen wird dann abtransportiert, woraufhin sich der Prozess wiederholt.

Insbesondere zur Realisierung einer festen Taktfrequenz, alternativ aber auch unabhängig von einem getakteten Beschickungskonzept, kann die Beschickungsvorrichtung zum Beschicken des Rollkäfigs mit den einzurollenden Produkten eine Drehschale umfassen, welche zwischen einer Aufnahme- und einer Abgabestellung bewegbar ist. Die Drehschale kann ähnlich einem Schaufelrad in der einen Position ein Würstchen, welches z.B. über eine Rutschbahn oder einen Zuführtrichter der Beschickungsvorrichtung in die Schale gelangt, aufnehmen und dann nach einer Rotation z.B. um 180° dieses Würstchen wieder freigeben, beispielsweise auf ein Förderband fallen lassen. Wenn die Drehschale sich in der Abgabestellung befindet, versperrt sie gleichzeitig den Weg für nachfolgende Würstchen, so dass die Zufuhrrate durch die Drehfrequenz der Drehschale steuerbar ist.

Nach einer bevorzugten Ausführungsform ist an einem Endbereich des Rollkäfigs ein Niederhalter für die einzurollenden Produkte, wie beispielsweise die Würstchen, vorgesehen. Von diesem Niederhalter werden die Würstchen, sobald sie in den Rollkäfig gelangt sind, im Innern des Rollkäfigs festgehalten. Besonders vorteilhaft ist ein federnd gelagerter oder flexibler Niederhalter, der jeweils von einem ankommenden Produkt gegen eine Rückstellkraft weggedrückt werden kann und so den Eintritt des Produkts in den Rollkäfig gestattet. Sobald sich das Würstchen im Rollkäfig befindet und von der oder den Transportwänden in Rotation versetzt wird, sorgt der wieder in seine Halteposition zurückgestellte Niederhalter dafür, dass das Würstchen nicht wieder aus dem Rollkäfig heraus gelangen kann. Die Rückstellkraft des Niederhalters kann einstellbar sein, so dass, je nachdem, mit welcher Geschwindigkeit die Transportwände betrieben werden oder welche Art von Produkten zugeführt wird, die gewünschte Funktionalität durch eine geeignete Wahl der Rückstellkraft gewährleistet werden kann. Alternativ kann der Niederhalter auch mit Hilfe eines Antriebs und nicht durch das Würstchen selbst so bewegt werden, dass er den Weg in den Rollkäfig abwechselnd zur Zufuhr eines Würstchens freigibt und, wenn das Würstchen in dem Rollkäfig gefangen ist, wieder versperrt.

Ein solcher Niederhalter kann gleichzeitig auch als Umlenker für die Scheiben dienen, wie es oben bereits beschrieben wurde.

Im Folgenden wird die Erfindung anhand zweier bevorzugter Ausführungsbeispiele und unter Bezugnahme auf die beigefügten Zeichnungen näher beschrieben. Dabei zeigen:
- Fig. 1A: eine schematische Darstellung einer Vorrichtung zum Aufrollen von flächigen Lebensmittelprodukten mit einer flachliegenden Scheibe eines solchen Lebensmittelprodukts;
- Fig. 1B: die Vorrichtung aus Fig. 1A mit einer bereits teilweise aufgerollten Scheibe;
- Fig. 1C: die Vorrichtung aus den Fig. 1A und 1B, wobei eine der Transportwände zum Abtransport der fertig aufgerollten Scheibe weggeklappt ist;
- Fig. 2A: eine schematische Darstellung einer Vorrichtung zum Einrollen von Würstchen in Lebensmittelscheiben mit einer Beschickungsvorrichtung für die Würstchen und einer noch flachliegenden Scheibe;
- Fig. 2B: die Vorrichtung aus Fig. 2A mit einem in einer Scheibe eingerollten Würstchen und zum Abtransport des fertig eingerollten Würstchens weggeklappter Transportwand.

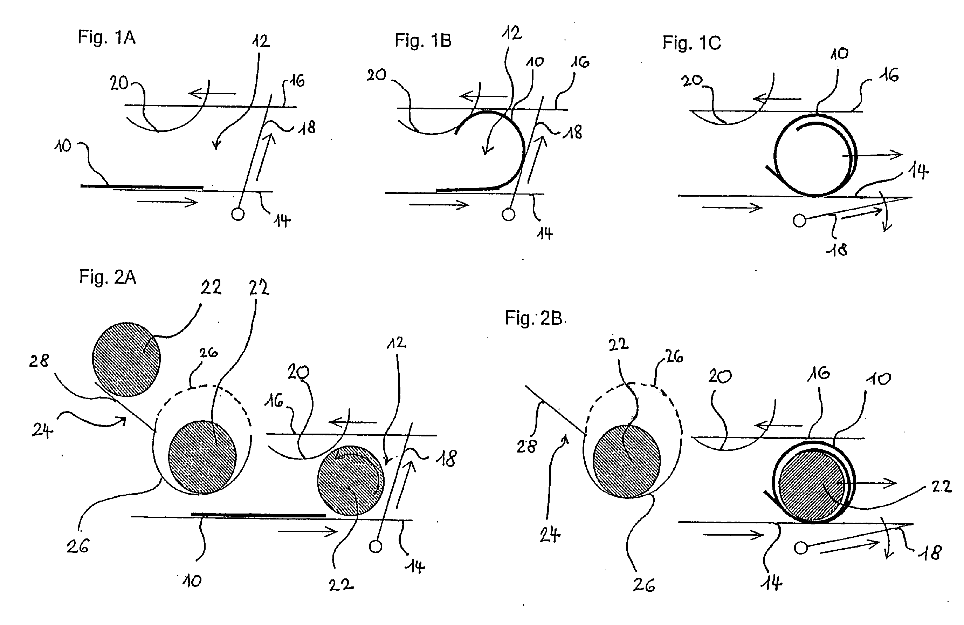

Die Fig. 1A bis 1C zeigen schematisch eine Aufrollvorrichtung für im Folgenden einfach als Scheiben bezeichnete flächige Lebensmittelprodukte 10 mit mehreren Transportwänden 14, 16, 18. Es sind drei aufeinander folgende Stadien eines Aufrollvorgangs dargestellt.

In den Fig. 1A und 1B ist ein Rollkäfig 12 von den drei Transportwänden 14, 16, 18 und einem zusätzlichen Umlenker 20 gebildet. Die Pfeile zeigen die Bewegungsrichtungen der Transportwände 14, 16, 18 an. Eine erste Transportwand 14 verläuft horizontal und wird von einem als Auflage für r die Scheiben 10 dienenden Förderband gebildet. Dieses Förderband ist sowohl links als auch rechts länger als in den Figuren dargestellt und dient links zur Zufuhr der flach liegenden Scheiben 10 und rechts zum Abtransport der aufgerollten Scheiben 10.

An die erste Transportwand 14 schließt sich eine näherungsweise vertikal verlaufende Transportwand 18 an, auf die wiederum eine parallel zu der ersten Transportwand 14 verlaufende dritte Transportwand 16 folgt. Die Neigung der näherungsweise vertikalen Transportwand 18 ist grundsätzlich beliebig einstellbar und wird insbesondere in Abhängigkeit von dem jeweiligen Anwendungsfall gewählt.

Die drei Transportwände 14, 16, 18 sind jeweils als Mehrstrangförderer ausgebildet und in den Umlenkbereichen kämmend angeordnet. Die erste Transportwand 14 und die dritte Transportwand 16 schließen einen Winkel von etwa 180° ein. Die Breite der Mehrstrangförderer ist auf die Breite der aufzurollenden Scheiben 10 abgestimmt, wobei auch ein Mehrbahnbetrieb mit parallel einlaufenden Scheiben 10 möglich ist.

Die Bewegungsrichtung der Transportwände 14, 16, 18 ist gleichsinnig, so dass insgesamt eine Aufrollbahn gebildet wird, mit der eine Scheibe 10 transportiert und aufgerollt werden kann. Die vertikale Transportwand 18 besitzt in einem möglichen Ausführungsbeispiel eine um etwa 20% größere Fördergeschwindigkeit als die untere Transportwand 14. Die Fördergeschwindigkeit der oberen Transportwand 16 ist dabei kleiner als diejenige der unteren Transportwand 14. Von einer solchen Geschwindigkeitskonfiguration, die sich für bestimmte Anwendungen als vorteilhaft herausgestellt hat, kann insbesondere in Abhängigkeit von den aufzurollenden Produkten und den verwendeten Förderern beliebig abgewichen werden.

Die zweite, annähernd vertikale Transportwand 18 ist beweglich gelagert und kann, wie in Fig. 1C erkennbar ist, von den beiden anderen Transportwänden 14, 16 durch Verschwenken so wegbewegt werden, dass der Rollkäfig 12 geöffnet wird. Falls ein Mehrbahnbetrieb mit parallel einlaufenden Scheiben 10 vorgesehen ist, kann dementsprechend für jede Bahn eine verschwenkbare Transportwand 18 vorgesehen sein, wobei diese einzelnen parallelen Transportwände 18 dann getrennt voneinander ansteuerbar sein können.

Der Umlenker 20 schließt sich an das Ende der oberen Transportwand 16 an und kann beispielsweise von einem flexiblen oder auslenkbaren Draht oder Schlauch oder einem zungenförmigen Materialstreifen gebildet sein. Der Umlenker 20 begrenzt einen Zuführbereich, über den die Scheiben 10 in den Rollkäfig 12 transportiert werden.

In Fig. 1A ist eine Scheibe 10 dargestellt, welche auf der ersten Transportwand 14 flach liegend in Richtung der zweiten Transportwand 18 und somit in den Rollkäfig 12 hinein transportiert wird. Wenn die Scheibe 10 mit ihrem vorderen Ende die Transportwand 18 erreicht, wird sie aus der Planlage angehoben und bewegt sich entlang der Transportrichtung der Transportwand 18 nach oben auf die dritte Transportwand 16 zu, von der sie erneut umgelenkt wird. Aufgrund der fettigen bzw. klebrigen Oberfläche der Scheibe haftet diese an den Transportwänden und kann somit auch gegen die Schwerkraft entlang der von den Transportwänden gebildeten Aufrollbahn transportiert werden.

In Fig. 1B ist gezeigt, wie die Scheibe 10 durch den Umlenker 20 mit ihrem vorderen Ende voraus auf ihren noch plan liegenden hinteren Endbereich gelenkt wird. Auf diese Weise wird die Scheibe 10 aufgerollt.

Im aufgerollten Zustand bliebe die Scheibe 10 im Rollkäfig 12 gefangen, wenn dieser nicht geöffnet würde.

Wie in Fig. 1C dargestellt, wird nach dem vollständigen Aufrollen der Scheibe 10 die Transportwand 18 herunter geklappt, so dass im Rollkäfig 12 eine Austrittsöffnung entsteht. Die aufgerollte Scheibe 10 wird nun von dem die erste Transportwand 14 des Rollkäfigs 12 bildenden Förderband abtransportiert.

Anschließend wird die Transportwand 18 wieder zurück in ihre ursprüngliche Position geschwenkt und eine nächste Scheibe 10 kann zugeführt werden (Fig. 1A).

In den Fig. 2A und 2B ist eine weitgehend mit der in den Fig. 1A bis 1C dargestellten Vorrichtung identische Vorrichtung abgebildet, welche allerdings zusätzlich eine Beschickungsvorrichtung 24 zum Beschicken des Rollkäfigs 12 mit Würstchen 22 aufweist. Die Beschickungsvorrichtung 24 umfasst eine schräg stehende Rutschbahn 28 und eine Drehschale 26 am Ende der Rutschbahn 28. Die Drehschale 26 besitzt eine trogartige Form mit halbkreisförmigem Querschnitt.

Die Drehschale 26 ist in einer Aufnahmeposition dargestellt, in der sie ein über die Rutsche 28 herangeführtes Würstchen 22 aufnehmen kann. Die Drehschale 26 rotiert mit einer konstanten Geschwindigkeit. In einer in Bezug auf die in den Fig. 2A und 2B dargestellte Aufnahmeposition um 180° gedrehten Abgabeposition, welche in den Fig. 2A und 2B gestrichelt dargestellt ist, hält die über das Ende der Rutschbahn 28 hinausragende Rückseite der Drehschale 26 die nachfolgenden Würstchen 22 zurück und das zuvor aufgenommene Würstchen 22 fällt auf das Förderband bzw. die Transportwand 14.

Das Würstchen 22 wird dann auf die etwa vertikal stehende Transportwand 18 zu transportiert, wobei es den Niederhalter 20 gegen eine Rückstellkraft wegdrückt und so in den Rollkäfig 12 gelangt. Der Niederhalter 20 ist durch einen flexiblen Draht oder Schlauch gebildet, der in einem Bogen verläuft und von dem Würstchen 22 so nach oben gedrückt werden kann, dass er den Weg in den Rollkäfig freigibt. Einmal in dem von den drei Transportwänden 14, 16, 18 gebildeten Rollkäfig 12 gefangen, wird das Würstchen 22 in Rotation versetzt. Der Niederhalter 20, welcher wieder seine Anfangsposition eingenommen hat, hindert das Würstchen 22 nun daran, den Rollkäfig 12 wieder durch die Zuführöffnung zu verlassen.

Die Zufuhr der Scheiben 20 ist so mit der Zufuhr der Würstchen 22 synchronisiert, dass - sobald das Würstchen 22 eine gewünschte Einrollwinkelgeschwindigkeit erreicht hat - eine Scheibe 10 herangeführt wird. Analog zu dem für die Fig. 1A bis 1C beschriebenen Vorgang wird die Scheibe 10 nun unter dem Einfluss der drei Transportwände 14, 16, 18 um das rotierende Würstchen 22 herumgewickelt

Wenn die Scheibe 10 komplett um das Würstchen 22 gewickelt ist, wird - wie in Fig. 1C - die zweite Transportwand 18 weggeschwenkt, so dass eine Austrittsöffnung entsteht. Das fertig eingerollte Würstchen 22 kann nun auf dem Förderband, welches die Transportwand 14 bildet, abtransportiert werden.

Die Transportwand 18 wird danach wieder in ihre Ausgangsstellung zurückbewegt, so dass der Rollkäfig 12 aufs Neue geschlossen ist, und erneut ein Würstchen 22 in dem Rollkäfig 12 gefangen, in Rotation versetzt und in eine Scheibe 10 eingerollt werden kann.

Erfindungsgemäß sind die beschriebene Vorrichtung und das beschriebene Verfahren nicht nur zum Einrollen von Würstchen in Speckscheiben geeignet, sondern es ist eine Vielzahl von Anwendungen denkbar. Anstelle von Würstchen können andere längliche Lebensmittelprodukte, wie z.B. Spargelstangen oder Cornichons, verarbeitet werden, aber auch das Einrollen von kugeligen, ovalen oder andersartig geformten Lebensmitteln ist denkbar. Neben Schinken, Speck und Wurstwaren können auch beliebige andere Lebensmittelprodukte in Form flexibler Scheiben mit der erfindungsgemäßen Vorrichtung aufgerollt oder zum Einrollen von anderen Produkten herangezogen werden. ###

### Bezugszeichenliste

- 10: aufzurollendes flächiges Produkt, Speckscheibe
- 12: Rollkäfig
- 14: Transportwand
- 16: Transportwand
- 18: Transportwand
- 20: Niederhalter / Umlenker
- 22: einzurollendes Produkt, Würstchen
- 24: Beschickungsvorrichtung
- 26: Drehschale
- 28: Rutschbahn

## Patentansprüche

1. Vorrichtung zum Aufrollen von flächigen Lebensmittelprodukten (10), insbesondere Schinken-, Speck-, Wurst- oder Käsescheiben, mit einem Rollkäfig (12), der von mehreren gleichsinnig bewegbaren Transportwänden (14, 16, 18) zumindest bereichsweise begrenzt ist,
**gekennzeichnet durch**
einen am Ende des Rollkäfigs (12) angeordneten Umlenker (20).

2. Vorrichtung nach Anspruch 1,
**dadurch gekennzeichnet,**
**dass** der Rollkäfig (12) einen ständig offenen Zuführbereich für die aufzurollenden Produkte (10) aufweist.

3. Vorrichtung nach einem der vorstehenden Ansprüche,
**dadurch gekennzeichnet,**
**dass** mehrere gerade ausgebildete Transportwände (14, 16, 18) vorgesehen sind und jeweils zwei aufeinander folgende Transportwände (14, 16, 18) einen Winkel von weniger als 180° einschließen.

4. Vorrichtung nach einem der vorstehenden Ansprüche,
**dadurch gekennzeichnet,**
**dass** eine erste Transportwand (14) und eine letzte Transportwand (16) einen Winkel von wenigstens 180° einschließen, wobei vorzugsweise die erste Transportwand (14) und die letzte Transportwand (16) einander gegenüberliegen und zumindest näherungsweise parallel zueinander verlaufen.

5. Vorrichtung nach einem der vorstehenden Ansprüche,
**dadurch gekennzeichnet,**
**dass** die Transportwand (14, 16, 18) als Förderband ausgebildet ist.

6. Vorrichtung nach einem der vorstehenden Ansprüche,
**dadurch gekennzeichnet,**
**dass** mehrere Transportwände (14, 16, 18) vorgesehen sind, welche als in Umlenkbereichen kämmende Mehrstrangförderer ausgebildet sind.

7. Vorrichtung nach einem der vorstehenden Ansprüche,
**dadurch gekennzeichnet,**
**dass** die Transportwand (14) von einem gleichzeitig für die Zufuhr der aufzurollenden Produkte (10) zum Rollkäfig (12) dienenden Förderband gebildet ist.

8. Vorrichtung nach einem der vorstehenden Ansprüche,
**dadurch gekennzeichnet,**
**dass** der Umlenker (20) in Richtung eines Zuführbereiches zeigt.

9. Vorrichtung nach einem der vorstehenden Ansprüche,
**dadurch gekennzeichnet,**
**dass** der Rollkäfig (12) eine verschließbare Austrittsöffnung für die aufgerollten Produkte (10) aufweist.

10. Vorrichtung nach einem der vorstehenden Ansprüche,
**dadurch gekennzeichnet,**
**dass** eine Transportwand (18) zur Bildung einer vorübergehenden Austrittsöffnung beweglich gelagert ist.

11. Vorrichtung nach einem der vorstehenden Ansprüche,
**dadurch gekennzeichnet,**
**dass** eine Transportwand (14) von einem gleichzeitig für die Zufuhr und den Abtransport der Produkte (10) dienenden Förderband gebildet ist.

12. Vorrichtung nach einem der vorstehenden Ansprüche,
**dadurch gekennzeichnet,**
**dass** sie eine Vorrichtung zur Beschickung (24) des Rollkäfigs (12) mit in die flächigen Produkte (10) einzurollenden, vorzugsweise länglichen Lebensmittelprodukten (22), insbesondere Würsten, aufweist.

13. Vorrichtung nach Anspruch 12,
**dadurch gekennzeichnet,**
**dass** die Beschickungsvorrichtung (24) so angeordnet ist, dass die einzurollenden Produkte (22) bezüglich einer Aufrollachse der flächigen Produkte (10) mit einer radialen und / oder tangentialen Richtungskomponente zuführbar sind.

14. Vorrichtung nach Anspruch 12 oder 13,
**dadurch gekennzeichnet,**
**dass** die Beschickungsvorrichtung (24) eine zwischen einer Aufnahme- und einer Abgabestellung bewegbare Drehschale (26) umfasst.

15. Vorrichtung nach einem der Ansprüche 12 bis 14,
**dadurch gekennzeichnet,**
**dass** an einem Endbereich des Rollkäfigs (12) ein Niederhalter (20) für die einzurollenden Produkte (22) vorgesehen ist.

16. Vorrichtung nach Anspruch 15,
**dadurch gekennzeichnet,**
**dass** der Umlenker (20) gleichzeitig als Niederhalter für die flächigen Produkte (10) ausgebildet ist.

17. Verfahren zum Aufrollen von flächigen Lebensmittelprodukten (10), bei dem die aufzurollenden Produkte (10) einem von mehreren gleichsinnig bewegten Transportwänden (14, 16, 18) zumindest bereichsweise begrenzten Rollkäfig (12) zugeführt werden und in dem Rollkäfigs (12) aufgerollt werden,
**dadurch gekennzeichnet, dass**
die aufzurollenden Produkte (10) am Ende des Rollkäfigs (12) von einem Umlenker (20) umgelenkt werden.

18. Verfahren nach Anspruch 17,
**dadurch gekennzeichnet,**
**dass** die Geometrie des Rollkäfigs (12) während des Aufrollens unverändert beibehalten wird.

19. Verfahren nach einem der Ansprüche 17 oder 18,
**dadurch gekennzeichnet,**
**dass** der Rollkäfig (12) zum Abtransport der aufgerollten Produkte (10) jeweils geöffnet wird.

20. Verfahren nach Anspruch 19,
**dadurch gekennzeichnet,**
**dass** zum Öffnen des Rollkäfigs (12) eine Transportwand (18) wegbewegt wird.

21. Verfahren nach einem der Ansprüche 17 bis 20,
**dadurch gekennzeichnet,**
**dass** verschiedene Transportwände (14, 16, 18) mit unterschiedlichen Transportgeschwindigkeiten betrieben werden.

22. Verfahren nach einem der Ansprüche 17 bis 21,
**dadurch gekennzeichnet,**
**dass** jeweils vor der Zuführung zumindest eines flächigen Produkts (10) der Rollkäfig (12) mit einem vorzugsweise länglichen, in das flächige Produkt (10) einzurollenden Lebensmittelprodukt (22) beschickt wird.

23. Verfahren nach Anspruch 22,
**dadurch gekennzeichnet,**
**dass** das einzurollende Produkt (22) vor der Zuführung des flächigen Produkts (10) in dem Rollkäfig (12) in Rotation versetzt wird und insbesondere von einem an einem Endbereich des Rollkäfigs (12) vorgesehenen Niederhalter (20) in einer Einrollposition gehalten wird.

24. Verfahren nach Anspruche 22 oder 23,
**dadurch gekennzeichnet,**
**dass** die einzurollenden Produkte (22) jeweils auf ein für die Zufuhr der flächigen Produkte (10) dienendes Förderband rutschen, gleiten oder fallen gelassen werden.

25. Verfahren nach einem der Ansprüche 22 bis 24,
**dadurch gekennzeichnet,**
**dass** die aufzurollenden Produkte (10) von einem Niederhalter (20) für die einzurollenden Produkte (22) umgelenkt werden.

26. Verfahren nach einem der Ansprüche 22 bis 25,
**dadurch gekennzeichnet,**
**dass** die Zufuhr der einzurollenden Produkte (22) mittels einer rotierenden Drehschale (26), insbesondere in Synchronisation mit der Zufuhr der flächigen Produkte (10), getaktet wird.

## Claims

1. An apparatus for the rolling up of areal food products (10), in particular slices of ham, bacon, sausage or cheese,
comprising a roll cage (12) which is bounded at least regionally by a plurality of transport walls (14, 16, 18) movable in the same sense, **characterised by** a redirector (20) arranged at the end of the roll cage (12).

2. An apparatus in accordance with claim 1, **characterised in that** the roll cage (12) has a constantly open supply region for the products (10) to be rolled up.

3. An apparatus in accordance with any one of the preceding claims, **characterised in that** a plurality of transport walls (14, 16, 18) made in a straight form are provided and two respective sequential transport walls (14, 16, 18) include an angle of less than 180°.

4. An apparatus in accordance with any one of the preceding claims, **characterised in that** a first transport wall (14) and a last transport wall (16) include an angle of at least 180°, with the first transport wall (14) and the last transport wall (16) preferably being disposed opposite one another and extending at least approximately parallel to one another.

5. An apparatus in accordance with any one of the preceding claims, **characterised in that** the transport wall (14, 16, 18) is made as a conveyor belt.

6. An apparatus in accordance with any one of the preceding claims, **characterised in that** a plurality of transport walls (14, 16, 18) are provided which are configured as multi-strand conveyors meshing in redirecting regions.

7. An apparatus in accordance with any one of the preceding claims, **characterised in that** the transport wall (14) is formed by a conveyor belt simultaneously serving for the supply of the products to be rolled up (10) to the roll cage (12).

8. An apparatus in accordance with any one of the preceding claims, **characterised in that** the redirector (20) faces in the direction of a supply region.

9. An apparatus in accordance with any one of the preceding claims, **characterised in that** the roll cage (12) has a closable outlet opening for the rolled up products (10).

10. An apparatus in accordance with any one of the preceding claims, **characterised in that** a transport wall (18) is movably supported for the formation of a temporary outlet opening.

11. An apparatus in accordance with any one of the preceding claims, **characterised in that** a transport wall (14) is formed by a conveyor belt simultaneously serving for the supply and the transporting away of the products (10).

12. An apparatus in accordance with any one of the preceding claims, **characterised in that** it has an apparatus for the loading (24) of the roll cage (12) with food products (22), preferably elongate food products, in particular sausages, to be rolled into the areal products (10).

13. An apparatus in accordance with claim 12, **characterised in that** the loading apparatus (24) is arranged such that the products (22) to be rolled in can be supplied with a radial and/or tangential direction component with respect to a roll-up axis of the areal products (10).

14. An apparatus in accordance with claim 12 or claim 13, **characterised in that** the loading apparatus (24) includes a rotary bowl (26) movable between a reception position and a dispensing position.

15. An apparatus in accordance with any one of the claims 12 to 14, **characterised in that** a hold-down device (20) is provided at an end region of the roll cage (12) for the products (22) to be rolled in.

16. A method in accordance with claim 15, **characterised in that** the redirector (20) is simultaneously made as a hold-down device for the areal products (10).

17. A method of rolling up areal food products (10), wherein the products (10) to be rolled up are supplied to a roll cage (12) bounded at least regionally by a plurality of transport walls (14, 16, 18) moved in the same sense and are rolled up in the roll cage,
**characterised in that**
the products (10) to be rolled up are redirected by a redirector (20) at the end of the roll cage (12).

18. A method in accordance with claim 17, **characterised in that** the geometry of the roll cage (12) is maintained unchanged during the rolling up.

19. A method in accordance with one of the claims 17 or 18, **characterised in that** the roll cage (12) is opened in each case for the transporting away of the rolled up products (10).

20. A method in accordance with claim 19, **characterised in that** a transport wall (18) is moved away to open the roll cage (12).

21. A method in accordance with any one of the claims 17 to 20, **characterised in that** different transport walls (14, 16, 18) are operated at different transport speeds.

22. A method in accordance with any one of the claims 17 to 21, **characterised in that** the roll cage (12) is loaded in each case before the supply of at least one areal product (10) with a food product (22), preferably an elongate food product, to be rolled into the areal product (10).

23. A method in accordance with claim 22, **characterised in that** the product (22) to be rolled in is set into rotation before the supply of the areal product (10) in the roll cage (12) and is in particular held in a roll-in position by a hold-down device (20) provided at an end region of the roll cage (12).

24. A method in accordance with claim 22 or claim 23, **characterised in that** the products (22) to be rolled in each slide, slip or drop onto a conveyor belt serving for the supply of the areal products (10).

25. A method in accordance with any one of the claims 22 to 24, **characterised in that** the products (10) to be rolled up are redirected by a hold-down device (20) for the products (22) to be rolled in.

26. A method in accordance with any one of the claims 22 to 25, **characterised in that** the supply of the products (22) to be rolled in are cycled by means of a rotating rotary bowl (26), in particular in synchronisation with the supply of the areal products (10).

## Revendications

1. Dispositif pour enrouler des produits alimentaires plats (10), en particulier des tranches de jambon, de lard, de saucisson ou de fromage, comprenant une cage d'enroulement (12) qui est délimitée au moins localement par plusieurs parois de transport (14, 16, 18) susceptibles d'être déplacées dans le même sens,
**caractérisé par**
un moyen de renvoi (20) agencé à l'extrémité de la cage d'enroulement (12).

2. Dispositif selon la revendication 1,
**caractérisé en ce que** la cage d'enroulement (12) comporte une zone d'amenée ouverte en permanence pour les produits à enrouler (10).

3. Dispositif selon l'une des revendications précédentes,
**caractérisé en ce qu'**il est prévu plusieurs parois de transport (14, 16, 18) réalisées rectilignes, et **en ce que** deux parois de transport (14, 16, 18) qui se suivent mutuellement définissent un angle inférieur à 180°.

4. Dispositif selon l'une des revendications précédentes,
**caractérisé en ce qu'**une première paroi de transport (14) et une dernière paroi de transport (16) définissent un angle d'au moins 180°, et de préférence la première paroi de transport (14) et la dernière paroi de transport (16) s'étendent à l'opposé l'une de l'autre et au moins approximativement parallèlement l'une à l'autre.

5. Dispositif selon l'une des revendications précédentes,
**caractérisé en ce que** la paroi de transport (14, 16, 18) est réalisée sous forme de bande de convoyage.

6. Dispositif selon l'une des revendications précédentes,
**caractérisé en ce qu'**il est prévu plusieurs parois de transport (14, 16, 18) qui sont réalisées sous forme de convoyeurs à brins multiples entrelacés dans les zones de renvoi.

7. Dispositif selon l'une des revendications précédentes,
**caractérisé en ce que** la paroi de transport (14) est réalisée par une bande de convoyage servant simultanément pour l'amenée des produits à enrouler (10) vers la cage d'enroulement (12).

8. Dispositif selon l'une des revendications précédentes,
**caractérisé en ce que** le moyen de renvoi (20) est dirigé en direction d'une zone d'amenée.

9. Dispositif selon l'une des revendications précédentes,
**caractérisé en ce que** la cage d'enroulement (12) comporte une ouverture de sortie susceptible d'être refermée pour les produits à enrouler (10).

10. Dispositif selon l'une des revendications précédentes,
**caractérisé en ce qu'**une paroi de transport (18) est montée mobile pour la formation d'une ouverture de sortie provisoire.

11. Dispositif selon l'une des revendications précédentes,
**caractérisé en ce qu'**une paroi de transport (14) est formée par une bande de convoyage servant simultanément pour l'amenée et pour l'évacuation des produits (10).

12. Dispositif selon l'une des revendications précédentes,
**caractérisé en ce qu'**il comprend un dispositif pour le chargement (24) de la cage d'enroulement (12) avec des produits alimentaires (22), de préférence de forme allongée, en particulier petites saucisses, qu'il s'agit d'envelopper à l'intérieur des produits plats (10).

13. Dispositif selon la revendication 12,
**caractérisé en ce que** le dispositif de chargement (24) est agencé de telle façon que les produits à envelopper (22) peuvent être amenés avec une composante de direction radiale et/ou tangentielle par référence à un axe d'enroulement des produits plats (10).

14. Dispositif selon la revendication 12 ou 13,
**caractérisé en ce que** le dispositif de chargement (24) comprend une coque tournante (26) mobile entre une position de réception et une position de déposition.

15. Dispositif selon l'une des revendications 12 à 14,
**caractérisé en ce qu'**il est prévu un moyen de maintien vers le bas (20) pour les produits à envelopper (22) dans une zone terminale de la cage d'enroulement (12).

16. Dispositif selon la revendication 15,
**caractérisé en ce que** le moyen de renvoi (20) est réalisé simultanément à titre de moyen de maintien vers le bas pour les produits plats (10).

17. Procédé pour enrouler des produits alimentaires plats (10), dans lequel les produits à enrouler (10) sont amenés à une cage d'enroulement (12) délimitée au moins par zones par plusieurs parois de transport (14, 16, 18) déplacées dans le même sens, et sont enroulés dans la cage d'enroulement (12),
**caractérisé en ce que** les produits à enrouler (10) sont renvoyés à la fin de la cage d'enroulement (12) par un moyen de renvoi (20).

18. Procédé selon la revendication 17,
**caractérisé en ce que** la géométrie de la cage d'enroulement (12) est conservée sans modification pendant l'enroulement.

19. Procédé selon l'une des revendications 17 ou 18,
**caractérisé en ce que** la cage d'enroulement (12) est ouverte à chaque fois pour l'évacuation des produits enroulés (10).

20. Procédé selon la revendication 19,
**caractérisé en ce qu'**une paroi de transport (18) est déplacée en éloignement pour ouvrir la cage d'enroulement (12).

21. Procédé selon l'une des revendications 17 à 20,
**caractérisé en ce que** différentes parois de transport (14, 16, 18) sont entraînées à des vitesses de transport différentes.

22. Procédé selon l'une des revendications 17 à 21,
**caractérisé en ce que**, à chaque fois avant l'amenée d'au moins un produit plat (10), la cage d'enroulement (12) est chargée avec un produit alimentaire 22, de préférence allongé, qu'il s'agit d'envelopper dans le produit plat (10).

23. Procédé selon la revendication 22,
**caractérisé en ce que** le produit à envelopper (22) est mis en rotation dans la cage d'enroulement (12) avant l'amenée du produit plat (10) et est en particulier maintenu dans une position d'enveloppement par un moyen de maintien vers le bas (20) prévu dans une zone terminale de la cage d'enroulement (12).

24. Procédé selon la revendication 22 ou 23,
**caractérisé en ce que** les produits à envelopper (22) sont amenés à glisser, à riper ou à tomber respectivement sur une bande de convoyage servant à l'amenée des produits plats (10).

25. Procédé selon l'une des revendications 22 à 24,
**caractérisé en ce que** les produits à enrouler (10) sont renvoyés par un moyen de maintien vers le bas (20) pour les produits à envelopper (22).

26. Procédé selon l'une des revendications 22 à 25,
**caractérisé en ce que** l'amenée des produits à envelopper (22) est cadencée au moyen d'une coque en rotation (26), en particulier en synchronisme avec l'amenée des produits plats (10).
